(19) Europäisches Patentamt
European Patent Office
Office européen des brevets

(11) **EP 3 230 338 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **15805514.5**

(22) Anmeldetag: **08.12.2015**

(51) Internationale Patentklassifikation (IPC):
**C08G 18/76** (2006.01)   **C08G 18/48** (2006.01)
**C08G 65/04** (2006.01)   **C08G 65/333** (2006.01)

(52) Gemeinsame Patentklassifikation (CPC):
**C08G 18/4812; C08G 18/4816; C08G 18/4841; C08G 18/7664; C08G 65/33348; B60N 2/75; B60N 2/80; C08G 2110/0008; C08G 2110/005; C08G 2110/0058; C08G 2110/0083; C08G 2350/00**

(86) Internationale Anmeldenummer:
**PCT/EP2015/079013**

(87) Internationale Veröffentlichungsnummer:
**WO 2016/091897 (16.06.2016 Gazette 2016/24)**

(54) **VERFAHREN ZUR HERSTELLUNG VON VISKOELASTISCHEN POLYURETHANSCHAUMSTOFFEN**

METHOD FOR THE PREPARATION OF VISCOELASTIC POLYURETHANE FOAMS

PROCÉDÉ DE FABRICATION DE MOUSSES DE POLYURÉTHANE VISCOÉLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2014 EP 14197081**

(43) Veröffentlichungstag der Anmeldung:
**18.10.2017 Patentblatt 2017/42**

(73) Patentinhaber: **Covestro Intellectual Property GmbH & Co. KG**
**51373 Leverkusen (DE)**

(72) Erfinder:
• **GOSSNER, Matthäus**
**51061 Köln (DE)**

• **BRASSAT, Lutz**
**51375 Leverkusen (DE)**
• **SEIDEL, Dieter**
**51143 Köln (DE)**

(74) Vertreter: **Levpat**
**c/o Covestro AG**
**Gebäude 4825**
**51365 Leverkusen (DE)**

(56) Entgegenhaltungen:
**WO-A1-01/32736      WO-A1-2013/045336**
**US-A1- 2012 161 353**

**Beschreibung**

Der Gegenstand der vorliegenden Erfindung betrifft ein Verfahren zur Herstellung eines viskoelastischen Polyurethan-Weichschaumstoffs. Weiterhin betrifft die Erfindung einen viskoelastischen Polyurethan-Weichblockschaumstoff oder viskoelastischen Polyurethan-Weichformschaumstoff mit besonders hohen Zugfestigkeiten, hergestellt nach dem erfindungsgemäßen Verfahren und Verwendung dieser Schaumstoffe. Weiterhin betrifft die vorliegende Erfindung Polyolzusammensetzungen, welche für die Herstellung von viskoelastischen Polyurethanschaumstoffen geeignet sind.

Viskoelastische Schaumstoffe, auch Memory-Schaumstoffe, Low-Resilience-Schaumstoffe oder energieabsorbierende Schäume genannt, werden heute verbreitet für die Herstellung von Matratzen, Kissen und Dämpfungselementen eingesetzt. Einsatzgebiete findet man in der Orthopädie, im Fahrzeugbau, als Verpackungsmaterial, in Sportartikeln, Spielzeug und Möbeln.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien in nahezu beliebiger und sehr komplexer Form und Struktur herstellen lassen.

Viskoelastische Schaumstoffe zeichnen sich durch eine langsame, graduelle Rückverformung nach einer erfolgten Kompression aus. Dies äußert sich z.B. in einer hohen Hysterese (> 20 %; in Druck-Spannungskurven bei der Bestimmung der Eindruckhärte nach DIN EN ISO 2439 oder der Stauchhärte nach DIN EN ISO 3386-1-98) oder in einer geringen Kugelrückprallelastizität (< 15 %; Bestimmung nach DIN EN ISO 8307).

WO-A 01/32736 offenbart eine Polyetherpolyol-Zusammensetzung zur Herstellung viskoelastischer Polyurethanschaumstoffe, die folgenden Bestandteile umfassend:

b1) ein Polyoxyethylen-Polyoxypropylen Polyol mit einer Funktionalität von 2 bis 6, worin das EO endständig ("EO-tipped") und/oder zufällig in der Polymerkette ("random") verteilt ist und der Gesamtgehalt an Ethylenoxid mind. 50 Gew.-% beträgt,

b2) ein Polyoxyethylen-Polyoxypropylen Polyol mit einer Funktionalität von 2 bis 6, worin das EO endständig ("EO-tipped") und/oder zufällig in der Polymerkette ("random") verteilt ist und der Gesamtgehalt an Ethylenoxid zwischen 20 und 50 Gew.-% liegt und der Anteil an primären Hydroxylgruppen mindestens 50 % beträgt, bezogen auf die Gesamtzahl primärer und sekundärer Hydroxylgruppen,

b3) einem Polyoxyethylen-Polyoxypropylen Polyol mit einer Funktionalität von 2 bis 6, worin der EO-Gehalt zwischen 10 und 20 Gew.-% beträgt und der Anteil an primären Hydroxylgruppen mindestens 50 % beträgt, bezogen auf die Gesamtzahl primärer und sekundärer Hydroxylgruppen,

b4) einem Polyalkylenglykol mit einem durchschnittlichen Molekulargewicht von 100 bis 120 g/mol; die Polyole b1, b2, b3 und b4 sind dabei bezogen auf die Gesamtmasse aller Polyole b1, b2, b3 und b4 in den folgenden Mengen enthalten: b1: 30-85 Gew.-%, b2: 5-65 Gew.-%, b3: 5-40 Gew.-%, b4: 0-50 Gew.-%.

EP-A 2 225 304-A1 offenbart viskoelastische Polyurethanschaumstoffe, welche eine Zugfestigkeit nach DIN EN ISO 1798 von 30 bis 60 kPa aufweisen. Die zur Herstellung dieser viskoelastischen Polyurethanschaumstoffe eingesetzte Polyetherpolyol-Zusammensetzung enthält

a) ein Polyetherpolyol mit einer Funktionalität von 2, einer OH-Zahl im Bereich von 50 bis 65 mg KOH/g und einem Anteil an primären OH-Gruppen im Bereich von 40 bis 80 % bezogen auf die Gesamtzahl primärer und sekundärer OH-Gruppen, welches einen PO-Gehalt von 45 bis 55 Gew.- % und einen EO-Gehalt von 40 bis 55 Gew.-% aufweist,

b) eine Dispersion eines Polymers in einem Polyetherpolyol, wobei die OH-Zahl der Dispersion in einem Bereich von 10 bis 30 mg KOH/g liegt, und wobei das das Polyetherpolyol eine Hydroxyl-Funktionalität von 3, einen Anteil primärer Hydroxylgruppen in einem Bereich von 70 bis 90 % bezogen auf die Gesamtzahl primärer und sekundärer Hydroxylgruppen, einen PO-Gehalt in einer Menge von 70 bis 90 Gew.-% und einen EO-Gehalt in einer Menge von 10 bis 30 Gew.-% aufweist;

c) ein Polyetherpolyol mit einer Hydroxyl-Funktionalität von 3, einer OH-Zahl in einem Bereich von 220 bis 290 mg KOH/g und einem Anteil primärer Hydroxylgruppen in einem Bereich von mindestens 90 % bezogen auf die Gesamtzahl primärer und sekundärer Hydroxylgruppen, welches einen PO-Gehalt in einer Menge von bis zu 2 Gew.-% und einen EO-Gehalt in einer Menge von mindestens 75 Gew.-% aufweist;

d) ein Polyetherpolyol mit einer Hydroxyl-Funktionalität von 2, einer OH-Zahl in einem Bereich von 50 bis 70 mg KOH/g und einem Anteil primärer Hydroxylgruppen in einem Bereich von 0 bis 3 % bezogen auf die Gesamtzahl primärer und sekundärer Hydroxylgruppen, welches einen PO-Gehalt in einer Menge von mindestens 95 Gew.-% und einen EO-Gehalt in einer Menge von bis zu 3 Gew.-% aufweist.

WO-A 2013/045336 offenbart viskoelastische Polyurethanschaumstoffe mit einer qualitativ hochwertigen Oberflächenwirkung bei denen sich die Oberfläche nicht abschält, die nicht kollabieren, die keine Hohlräume beim Ausformen bilden und dennoch eine gleichmäßige Porengröße haben. Es wird jedoch kein Polyetherpolyol mit den Merkmalen der Komponente A4 offenbart und auch keinen Hinweis gegeben, wie die Zugfestigkeit von viskoelastischen Polyurethanschaumstoffen erhöht werden kann.

Die bislang bekannten viskoelastischen Polyurethanschaumstoffe weisen in der Regel Zugfestigkeiten bestimmt nach DIN EN ISO 1798 im Bereich von 30 bis 90 kPa auf. Wünschenswert wären viskoelastische Polyurethanschaumstoffe, die eine deutlich höhere Zugfestigkeit mit geringer Temperaturabhängigkeit des viskoelastischen Charakters aufweisen. Weiterhin sollen die für die Herstellung dieser viskoelastischen Polyurethanschaumstoffe eingesetzten Komponenten einfach zu verarbeiten sein.

Die Aufgabe der vorliegenden Erfindung bestand daher darin, ein einfaches Verfahren zur Herstellung von viskoelastischen Polyurethanweichschaumstoffen mit Zugfestigkeiten gemäß DIN EN ISO 1798 von ≥ 90 kPa, vorzugsweise ≥ 95 kPa, besonders bevorzugt ≥ 100 kPa bereit zu stellen.

Diese Aufgabe wurde überraschenderweise gelöst durch ein Verfahren zur Herstellung von viskoelastischem Polyurethanweichschaumstoff, erhältlich durch Umsetzung einer Polyolkomponente A enthaltend

A1 mindestens ein Polyetherpolyol mit einer Funktionalität von 2 bis 6, vorzugsweise 2 bis 4, mit einer OH-Zahl gemäß DIN 53240 von ≥ 20 bis ≤ 80 mg KOH/g, vorzugsweise ≥ 25 bis ≤ 50 mg KOH/g, besonders bevorzugt von ≥ 30 bis ≤ 40 mg KOH/g, wobei das Ethylenoxid als EO-Mischblock und terminalem Block aus reinem Ethylenoxid vorliegt, wobei der Gesamtgehalt an Ethylenoxid ≥ 50 Gew.-%, vorzugsweise ≥ 60 Gew.-%, besonders bevorzugt ≥ 65 Gew.-% beträgt, mit einem Gehalt an primären Hydroxylgruppen von ≥ 50 mol-%, vorzugsweise von ≥ 60 mol-%, besonders bevorzugt ≥ 75 mol-%,

A2 mindestens ein Polyetherpolyol mit einer Funktionalität von 2 bis 6, vorzugsweise von 2 bis 4, mit einer OH-Zahl gemäß DIN 53240 von ≥ 180 bis ≤ 320 mg KOH/g, vorzugsweise von ≥ 190 bis ≤ 300 mg KOH/g, besonders bevorzugt von ≥ 210 bis ≤ 280 mg KOH/g wobei das Ethylenoxid als EO-Mischblock vorliegt, wobei der Gesamtgehalt an Ethylenoxid 0 bis 10 Gew.-%, vorzugsweise von 0 bis 5 Gew.-%, besonders bevorzugt 0 Gew.-% beträgt,

A3 mindestens ein Polyetherpolyol mit einer Funktionalität von 2 bis 6, vorzugsweise von 2 bis 4, mit einer OH-Zahl gemäß DIN 53240 von ≥ 15 bis ≤ 40 mg KOH/g, vorzugsweise von ≥ 20 bis ≤ 35 mg KOH/g, besonders bevorzugt von ≥ 23 bis ≤ 33 mg KOH/g, wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.-%, besonders bevorzugt 10 bis 20 Gew.-% beträgt, mit einem Gehalt an primären Hydroxylgruppen von ≥ 50 mol-%, vorzugsweise von ≥ 60 mol-%, besonders bevorzugt von ≥ 70 mol-%,

A4 mindestens ein Polyetherpolyol mit einer Funktionalität von ≥ 2,0 bis ≤ 2,2, mit einer OH-Zahl gemäß DIN 53240 von ≥ 10 bis ≤ 40 mg KOH/g, vorzugsweise von ≥ 15 bis <35 mg KOH/g, besonders bevorzugt von ≥ 20 bis ≤ 30 mg KOH/g wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.-%, besonders bevorzugt von 10 bis 20 Gew.-% beträgt, mit einem Gehalt an primären Hydroxylgruppen von ≥ 50 mol-%, vorzugsweise von ≥ 60 mol-%, besonders bevorzugt von ≥ 70 mol-%,

A5 Wasser und/oder physikalisches Treibmittel,

A6 Verbindungen, enthaltend Polyetherpolyole mit einer OH-Zahl gemäß DIN 53420 von 250 bis 550 mg KOH/g, vorzugsweise 300 bis 500 mg KOH/g, besonders bevorzugt von 350 bis 450 mg KOH/g.

A7 Hilfs- und Zusatzstoffe wie

a) Katalysatoren,
b) oberflächenaktive Zusatzstoffe,
c) Additive

mit Komponente B enthaltend Di- und/oder Polyisocyanate
bei einem Isocyanat-Index von 70 bis 120, vorzugsweise von 80 bis 100.

Im erfindungsgemäßen Verfahren können die Komponenten gemäß den folgenden Anteilen umgesetzt werden, wobei die Summe der Gewichtsteile von A1, A2, A3 und A4 100 ergibt: A1: von 25 bis 45 Gew.-Teile, vorzugsweise von 28 bis 40 Gew.-Teile, besonders bevorzugt von 32 bis 38 Gew.-Teile; A2: von 23 bis 40 Gew.-Teile, vorzugsweise von 25 bis 38 Gew.-Teile; besonders bevorzugt von 28 bis 34 Gew.-Teile; A3: von 20 bis 35 Gew.-Teile, vorzugsweise von 23 bis 33 Gew.-Teile, besonders bevorzugt von 27 bis 31 Gew.-Teile; A4: bis 10 Gew.-Teile, vorzugsweise bis 8 Gew.-Teile, besonders bevorzugt bis 6 Gew.-Teile; A5: 0,5 bis 25 Gew.-Teile, vorzugsweise 0,8 bis 15,0 Gew.-Teile, besonders bevorzugt 1,0 bis 5,0 Gew.-Teile (bezogen auf die Summe der Gew.-Teile der Komponenten A1, A2, A3 und A4); A6: von 0,1 bis 10,0 Gew.-Teile, vorzugsweise von 0,2 bis 9,0 Gew.-Teile, besonders bevorzugt 3,0 bis 7,0 Gew.-Teile (bezogen auf die Summe der Gew.-Teile der Komponenten A1, A2, A3 und A4); A7: 0,05 bis 10,0 Gew.-Teile, vorzugsweise 0,1 bis 7,5 Gew.-Teile, besonders bevorzugt 0,15 bis 7,0 Gew.-Teile (bezogen auf die Summe der Gew.-Teile der Komponenten A1, A2, A3 und A4).

Die nach dem erfindungsgemäßen Verfahren erhältlichen viskoelastischen Polyurethanschaumstoffe weisen eine Zugfestigkeiten von $\geq$ 90 kPa, vorzugsweise $\geq$ 95 kPa, besonders bevorzugt $\geq$ 100 kPa auf. Weiterhin weisen diese viskoelastischen Polyurethanschaumstoffe eine Rohdichte gemäß DIN EN ISO 845 von 40 bis 70 kg/m$^3$, vorzugsweise von 45 bis 55 kg/m$^3$ auf.

Ein weiterer Gegenstand der Erfindung ist eine Polyolzusammensetzung enthaltend

A1 mindestens ein Polyetherpolyol mit einer Funktionalität von 2 bis 6, vorzugsweise 2 bis 4, mit einer OH-Zahl gemäß DIN 53240 von $\geq$ 20 bis $\leq$ 80 mg KOH/g, vorzugsweise $\geq$ 25 bis $\leq$ 50 mg KOH/g, besonders bevorzugt von $\geq$ 30 bis $\leq$ 40 mg KOH/g, wobei das Ethylenoxid als EO-Mischblock und terminalem Block aus reinem Ethylenoxid vorliegt, wobei der Gesamtgehalt an Ethylenoxid $\geq$ 50 Gew.-%, vorzugsweise $\geq$ 60 Gew.-%, besonders bevorzugt $\geq$ 65 Gew.-% beträgt, mit einem Gehalt an primären Hydroxylgruppen von $\geq$ 50 mol-%, vorzugsweise von $\geq$ 60 mol-%, besonders bevorzugt $\geq$ 75 mol-%,

A2 mindestens ein Polyetherpolyol mit einer Funktionalität von 2 bis 6, vorzugsweise von 2 bis 4, mit einer OH-Zahl gemäß DIN 53240 von $\geq$ 180 bis $\leq$ 320 mg KOH/g, vorzugsweise von $\geq$ 190 bis $\leq$ 300 mg KOH/g, besonders bevorzugt von $\geq$ 210 bis $\leq$ 280 mg KOH/g wobei das Ethylenoxid als EO-Mischblock vorliegt, wobei der Gesamtgehalt an Ethylenoxid 0 bis 10 Gew.-%, vorzugsweise von 0 bis 5 Gew.-%, besonders bevorzugt 0 Gew.-% beträgt,

A3 mindestens ein Polyetherpolyol mit einer Funktionalität von 2 bis 6, vorzugsweise von 2 bis 4, mit einer OH-Zahl gemäß DIN 53240 von $\geq$ 15 bis $\leq$ 40 mg KOH/g, vorzugsweise von $\geq$ 20 bis $\leq$ 35 mg KOH/g, besonders bevorzugt von $\geq$ 23 bis $\leq$ 33 mg KOH/g, wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.-%, besonders bevorzugt 10 bis 20 Gew.-% beträgt, mit einem Gehalt an primären Hydroxylgruppen von $\geq$ 50 mol-%, vorzugsweise $\geq$ 60 mol-%, besonders bevorzugt $\geq$ 70 mol-%,

A4 mindestens ein Polyetherpolyol mit einer Funktionalität von $\geq$ 2,0 bis $\leq$ 2,2 mit einer OH-Zahl gemäß DIN 53240 von $\geq$ 10 bis $\leq$ 40 mg KOH/g, vorzugsweise von $\geq$ 15 bis <35 mg KOH/g, besonders bevorzugt von $\geq$ 20 bis $\leq$ 30 mg KOH/g wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.-%, besonders bevorzugt von 10 bis 20 Gew.-% beträgt, mit einem Gehalt an primären Hydroxylgruppen von $\geq$ 50 mol-%, vorzugsweise von $\geq$ 60 mol-%, besonders bevorzugt von $\geq$ 70 mol-%,

In der Polyolzusammensetzung können die Polyetherpolyole A1 bis A4 in folgenden Mengen enthalten sein: A1: von 25 bis 45 Gew.-%, vorzugsweise von 28 bis 40 Gew.- %, besonders bevorzugt 32 bis 38 Gew.- %; A2: von 23 bis 40 Gew.- %, vorzugsweise von 25 bis 38 Gew.- %; besonders bevorzugt von 28 bis 34 Gew.- %; A3: von 20 bis 35 Gew.- %, vorzugsweise von 23 bis 33 Gew.- %, besonders bevorzugt von 27 bis 31 Gew.- %; A4: bis 10 Gew.- %, vorzugsweise bis 8 Gew.- %, besonders bevorzugt bis 6 Gew.- %.

Um die Polyetherpolyole der Komponente A genauer spezifizieren zu können, haben sich gemäß dem Stand der Technik verschiedene Kenngrößen herauskristallisiert:

i.) Die Hydroxyl-Funktionalität, welche vom Starter-Molekül abhängt, auf dem aufbauend das Polyetherpolyol synthetisiert wird;

ii.) die Hydroxyl- oder OH-Zahl, welche ein Maß für den Gehalt an Hydroxylgruppen ist, und in mg KOH/g angegeben wird. Sie wird gemäß DIN 53240 bestimmt;

iii.) die Molekularmasse ($M_w$), welche ein Maß für die Länge der Polyoxyalkylen-Ketten der Polyetherpolyole ist.

Die oben genannten Größen können dabei über die folgende Gleichung in Bezug zueinander gesetzt werden: 56100 = OH-Zahl · ($M_w$/Hydroxyl-Funktionalität).

Die Herstellung der Verbindungen gemäß A1 bis A4 und A6 kann durch katalytische Addition von einem oder mehreren Alkylenoxiden an Starterverbindungen mit zerewitinoff-aktiven Wasserstoffatomen erfolgen.

Für die Herstellung der Polyetherpolyole eingesetzten Starterverbindungen mit zerewitinoff-aktiven Wasserstoffatomen weisen Funktionalitäten von 2 bis 6, vorzugsweise 2 bis 4 auf und sind hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, 1,6-Hexandiol, 1,5-Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Es können auch Mischungen an Starterverbindungen eingesetzt werden. Vorzugsweise wird als Starterverbindung Glycerin, Trimethylolpropan und/oder Sorbitol eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A1

Komponente A1 enthält mindestens ein Polyetherpolyol mit einer Funktionalität von 2 bis 6, vorzugsweise von 2 bis 4, mit einer OH-Zahl gemäß DIN 53240 von $\geq 20$ bis $\leq 80$ mg, vorzugsweise von $\geq 25$ bis $\leq 50$ mg KOH/g, besonders bevorzugt von $\geq 30$ bis $\leq 40$ mg KOH/g, wobei das Ethylenoxid als EO-Mischblock und terminalem Block aus reinem Ethylenoxid vorliegt, wobei der Gesamtgehalt an Ethylenoxid $\geq 50$ Gew.-%, vorzugsweise $\geq 60$ Gew.-%, besonders bevorzugt $\geq 65$ Gew.-% beträgt, mit einem Gehalt an primären Hydroxylgruppen von $\geq 50$ mol-%, vorzugsweise von $\geq 60$ mol-%, besonders bevorzugt $\geq 75$ mol-%.

Komponente A2

Komponente A2 enthält mindestens ein Polyetherpolyol mit einer Funktionalität von 2 bis 6, vorzugsweise von 2 bis 4, mit einer OH-Zahl gemäß DIN 53240 von $\geq 180$ bis $\leq 320$ mg KOH/g, vorzugsweise von $\geq 190$ bis $\leq 300$ mg KOH/g, besonders bevorzugt von $\geq 210$ bis $\leq 280$ mg KOH/g wobei das Ethylenoxid als EO-Mischblock vorliegt, wobei der Gesamtgehalt an Ethylenoxid 0 bis 10 Gew.-%, vorzugsweise von 0 bis 5 Gew.-%, besonders bevorzugt 0 Gew.-% beträgt.

Komponente A3

Komponente A3 enthält mindestens ein Polyetherpolyol mit einer Funktionalität von 2 bis 6, vorzugsweise von 2 bis 4, mit einer OH-Zahl gemäß DIN 53240 von $\geq 15$ bis $\leq 40$ mg KOH/g, vorzugsweise von $\geq 20$ bis $\leq 35$ mg KOH/g, besonders bevorzugt von $\geq 23$ bis $\leq 33$ mg KOH/g, wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.- %, besonders bevorzugt 10 bis 20 Gew.-% beträgt, mit einem Gehalt an primären Hydroxylgruppen von $\geq 50$ mol-%, vorzugsweise von $\geq 60$ mol-%, besonders bevorzugt von $\geq 70$ mol-%.

Komponente A4

Komponente A4 enthält mindestens ein Polyetherpolyol mit einer Funktionalität von $\geq 2,0$ bis $\leq 2,2$, mit einer OH-Zahl gemäß DIN 53240 von $\geq 10$ bis $\leq 40$ mg KOH/g, vorzugsweise von $\geq 15$ bis $\leq 35$ mg KOH/g, besonders bevorzugt von $\geq 20$ bis $\leq 30$ mg KOH/g wobei das Ethylenoxid als terminaler Block aus reinem Ethylenoxid und optional als EO-Mischblock vorliegt, wobei der Gesamtgehalt an Ethylenoxid 5 bis 30 Gew.-%, vorzugsweise 10 bis 25 Gew.-%, besonders bevorzugt von 10 bis 20 Gew.-% beträgt, mit einem Gehalt an primären Hydroxylgruppen von $\geq 50$ mol-%, vorzugsweise von $\geq 60$ mol-%, besonders bevorzugt von $\geq 70$ mol-%.

Die Vorzugsbereiche der erfindungsgemäßen Komponenten A1 bis A4 können beliebig miteinander kombiniert werden.

Komponente A5

Als Komponente A5 wird Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente A5 eingesetzt.

Komponente A6

Komponente A6 enthält Polyetherpolyole mit einer OH-Zahl gemäß DIN 53420 von 250 bis 550 mg KOH/g, vorzugsweise von 300 bis 500 mg KOH/g, besonders bevorzugt von 350 bis 450 mg KOH/g.

Komponente A7

Als Komponente A7 werden Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesondere solche mit niedriger Emission wie beispielsweise Produkte der Tegostab® LF-Serie,

c) Additive wie Reaktionsverzögerer (z.B. leicht sauer reagierende Stoffe, Zellregler (wie beispielsweise Paraffine oder Fettalkohole oder Dimethylpolysiloxane), Pigmente, Farbstoffe, Flammschutzmittel, (wie beispielsweise Trikresylphosphat, Ammoniumpolyphosphat, Melamin, Trischlorisopropylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

$\alpha$) Harnstoff, Derivate des Harnstoffs und/oder

$\beta$) Amine und Aminoether, welche jeweils eine funktionelle Gruppe enthalten, die mit dem Isocyanat chemisch reagieren. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente B

Komponente B enthält Diisocyanate, Polyisocyanate, Mischungen von Diisocyanaten und/oder Polyisocyanaten, deren Mischungen von Isomeren, Carbodiimide, Uretdionimine oder Prepolymere.

Geeignete Di- und/oder Polyisocyanate, Mischungen von Diisocyanaten und/oder Polyisocyanaten, deren Mischungen von Isomeren sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (III)

$$Q(NCO)_n, \qquad (I)$$

in der

n = 2 - 4, vorzugsweise 2 -3,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und/oder 2,6-Toluylendiisocyanat, 4,4'-, 2,4'-, 2,2'-Diphenylmethandiisocyanat, oligomeres Diphenylmethandiisocyanat und Polyphenylpolymethylenpolyisocyanat ("Mehrkern-MDI") eingesetzt, besonders bevorzugt werden Gemische von 4,4'-, 2,4'-, 2,2'-Diphenylmethandiisocyanat, oligomeres Diphenylmethandiisocyanat und/oder Polyphenylpolymethylenpolyisocyanat ("Mehrkern-MDI") als Polyisocyanat eingesetzt.

Der NCO-Gehalt der eingesetzten Isocyanat-Komponente B liegt in einem Bereich von 20 bis 45 Gew.-%, vorzugsweise von 28 bis 40 Gew.-%, besonders bevorzugt von 30,5 bis 34 Gew.-%.

In einer besonders bevorzugten Ausführungsform der vorliegenden Erfindung wird als Komponente B eine Mischung von 4,4'-, 2,4'-, 2,2'-Diphenylmethandiisocyanat, oligomerem Diphenylmethandiisocyanat und/oder Polyphenylpolymethylenpolyisocyanat ("Mehrkern-MDI") mit einem NCO-Gehalt von 30,5 bis 34 Gew.-% eingesetzt.

Zur Herstellung der viskoelastischen Polyurethanweichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die viskoelastischen Polyurethanweichschaumstoffe können als Form- oder auch als Blockschaumstoffe, vorzugsweise als Blockschaumstoffe hergestellt werden. Gegenstand der Erfindung sind daher ein Verfahren zur Herstellung der viskoelastischen Polyurethanweichschaumstoffe, die nach diesen Verfahren hergestellten viskoelastischen Polyurethanweichschaumstoffe, die nach diesen Verfahren hergestellten viskoelastischen Polyurethanweichblockschaumstoffe bzw. Polyurethanweichformschaumstoffe, die Verwendung der Polyurethanweichschaumstoffe zur Herstellung von Formteilen sowie die Formteile selbst. Die nach der Erfindung erhältlichen viskoelastischen Polyurethanweichschaumstoffe finden beispielsweise folgende Anwendung: Möbelpolsterungen, Textileinlagen, Matratzen, Automobilsitze, Kopfstützen, Armlehnen, Schwämme und Bauelemente.

Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad (II)$$

Die nach dem erfindungsgemäßen Verfahren hergestellten viskoelastischen Polyurethanschaumstoffe werden bei einem Isocyanat-Index von 70 bis 120, vorzugsweise von 80 bis 100 hergestellt.

Die erfindungsgemäß hergestellten viskoelastischen Polyurethanschaumstoffe weisen Zugfestigkeiten von $\geq$ 90 kPa, vorzugsweise $\geq$ 95 kPa, besonders bevorzugt $\geq$ 100 kPa auf.

Vorzugsweise wird das erfindungsgemäße Verfahren zur Herstellung von viskoelastischen Polyurethanweichblockschaumstoffen eingesetzt. Die nach dem erfindungsgemäßen Verfahren erhältlichen viskoelastischen Polyurethanschaumstoffe finden beispielsweise Anwendung für Möbelpolsterungen, Textileinlagen, Matratzen, Automobilsitze, Kopfstützen, Armlehnen, Schwämmen und Bauelementen, sowie Sitz- und Armaturverkleidungen, vorzugsweise für Möbelpolsterungen, Textileinlagen, Matratzen, Automobilsitze und Kopfstützen.

Beispiele:

| | |
|---|---|
| Polyol A1-1: | Polyetherpolyol mit einer Funktionalität von 3, einer OH-Zahl gemäß DIN 53240 von 37 mg KOH/g, einem Ethylenoxid-Mischblock und einem terminalen Block aus reinem Ethylenoxid mit einem Gesamtgehalt an Ethylenoxid von 72 Gew.-% und einem primären Hydroxylgruppen-Gehalt von 83 mol-%. |
| Polyol A2-1: | Polyetherpolyol mit einer Funktionalität von 3, einer OH-Zahl gemäß DIN 53240 von 235 mg KOH/g, wobei das Polyetherpolyol ein reines Polypropylenpolyol ist. |
| Polyol A3-1: | Polyetherpolyol mit einer Funktionalität von 3, einer OH-Zahl gemäß DIN 53240 von 28 mg KOH/g, einem terminalen Block aus reinem Ethylenoxid mit einem Gesamtgehalt an Ethylenoxid von 15 Gew.-% und einem primären Hydroxylgruppen-Gehalt von 85 mol-%. |
| Polyol A4-1: | Polyetherpolyol mit einer Funktionalität von 2, einer OH-Zahl gemäß DIN 53240 von 28 mg KOH/g, einem terminalen Block aus reinem Ethylenoxid mit einem Gesamtgehalt an Ethylenoxid von 13,2 Gew.-% und einem primären Hydroxygruppen-Gehalt von 86,8 mol-%. |
| A6: | Zusatzmittel VP.PU 49WB81 der Firma Covestro Deutschland AG; Additiv für Verbesserung der viskoelastischen Eigenschaften |
| A7-1: | Silikonstabilisator Tegostab® B 8681 der Fa. Evonik |
| A7-2: | Dabco® NE 500 der Fa. Air Products |
| A7-3: | Dabco® NE 300 der Fa. Air Products |
| A7-4: | Harnstoff technisch, Reinheit $\geq$ 98 % |

Isocyanat-Komponente B:
Gemisch von Diphenylmethandiisocyanat-Isomeren (MDI) und höherfunktionellen Homologen mit einem NCO-Gehalt von 30,5 bis 34,0 Gew.-%.

Die Kennzahl (Isocyanat -Index) gibt das Verhältnis der tatsächlich eingesetzten Isocyanat-Menge zur stöchiometrischen, d.h. für die Umsetzung der OH-Äquivalente berechnete Menge an Isocyanat- Gruppen (NCO)-Menge an:

$$\text{Kennzahl} = [(\text{Isocyanat-Menge eingesetzt}) : (\text{Isocyanat-Menge berechnet})] \bullet 100 \qquad (II)$$

Die Rohdichte wurde bestimmt gemäß DIN EN ISO 845.

Die OH-Zahl wurde bestimmt gemäß DIN 53240.

Zugfestigkeit und Bruchdehnung werden nach DIN EN ISO 1798 bestimmt.

Die Stauchhärte (CLD 40 %, 4. Stauchung) wurde bestimmt gemäß DIN EN ISO 3386-1 bei einer Verformung von 40 %, 4. Zyklus.

Der Druckverformungsrest ("DVR") bei 50 % (DVR 50 %) bzw. 90 % (DVR 90 %) Kompression über 22 Stunden bei 70 °C wird nach DIN EN ISO 1856 bestimmt und wird in % angegeben.

Bestimmung der Kugelrückprallelastizität gemäß DIN EN ISO 8307

Der NCO-Gehalt wurde in Anlehnung an DIN EN ISO 14896 bestimmt.

Die analytische Bestimmung der primären OH-Gruppen erfolgte durch integrale Auswertung von 1H-NMR-Spektren der jeweiligen Produkte.

Der viskoelastische Polyurethan-Schaumstoff wurde wie folgt hergestellt:
In für die Herstellung von Polyurethanschaumstoffen üblicher Verarbeitungsweise nach dem Einstufenverfahren wurden die in den Beispielen der in der nachfolgenden Tabelle 1 aufgeführten Einsatzstoffe miteinander zur Reaktion gebracht.

**Tabelle 1:** Viskoelastische Polyurethan-Schaumstoffe

|  |  | 1 | 2 | 3 | 4 |
|---|---|---|---|---|---|
| A1-1 | [Gew.-Tle.] | 35,00 | 35,00 | 36,58 | 36,58 |
| A2-1 | [Gew.-Tle.] | 31,42 | 31,42 | 32,84 | 32,84 |
| A3-1 | [Gew.-Tle.] | 29,25 | 29,25 | 30,58 | 30,58 |
| A4-1 | [Gew.-Tle.] | 4,33 | 4,33 | 0 | 0 |
| A5 Wasser (insgesamt) | [Gew.-Tle.] | 1,97 | 1,97 | 1,97 | 1,97 |
| A6 | [Gew.-Tle.] | 8,00 | 5,00 | 8,00 | 5,00 |
| A7-1 | [Gew.-Tle.] | 0,20 | 0,20 | 0,20 | 0,20 |
| A7-2 | [Gew.-Tle.] | 0,76 | 0,76 | 0,76 | 0,76 |
| A7-3 | [Gew.-Tle.] | 0,18 | 0,18 | 0,18 | 0,18 |
| A7-4 * | [Gew.-Tle.] | 0,45 | 0,45 | 0,45 | 0,45 |
| Komponente B | [Gew.-Tle.] | 54,8 | 53,0 | 54,62 | 51,98 |
| Index | [-] | 93 | 93 | 93 | 93 |
| Rohdichte | [kg/m$^3$] | 54,8 | 47,28 | 53,8 | 52,7 |
| CLD 40 % (4. Stauchung) | [kPa] | 2,34 | 2,05 | 2,91 | 2,28 |
| Zugfestigkeit | [kPa] | 108 | 112 | 118 | 115 |
| Bruchdehnung | [%] | 140 | 141 | 133 | 144 |
| Kugelrückprallelastizität | [%] | 3 | 6 | 7 | 7 |
| DVR 50 % | [%] | 1,6 | 1,2 | 1,4 | 1,4 |
| DVR 90 % | [%] | 1,8 | 1,7 | 1,3 | 2,1 |
| *eingesetzt als 50 %-ige wässrige Lösung; angegeben ist die reine Harnstoffmenge |  |  |  |  |  |

**Patentansprüche**

1. Verfahren zur Herstellung von viskoelastischen Polyurethan-Schaumstoff erhältlich durch Umsetzung einer Polyolkomponente A enthaltend

A1 mindestens ein Polyetherpolyol mit einer Funktionalität von 2 bis 6, mit einer OH-Zahl gemäß DIN 53240 von ≥ 20 bis ≤ 80 mg KOH/g, wobei das Ethylenoxid als EO-Mischblock und terminalem Block aus reinem Ethylenoxid vorliegt, wobei der Gesamtgehalt an Ethylenoxid ≥ 50 Gew.-% beträgt, mit einem Gehalt an primären Hydroxylgruppen von ≥ 50 mol-%,

A2 mindestens ein Polyetherpolyol mit einer Funktionalität von 2 bis 6, mit einer OH-Zahl gemäß DIN 53240 von ≥ 180 bis ≤ 320 mg KOH/g, wobei das Ethylenoxid als EO-Mischblock vorliegt, wobei der Gesamtgehalt an Ethylenoxid 0 bis 10 Gew.-% beträgt,

A3 mindestens ein Polyetherpolyol mit einer Funktionalität von 2 bis 6, mit einer OH-Zahl gemäß DIN 53240 von ≥ 15 bis ≤ 40 mg KOH/g wobei das Ethylenoxid als terminaler Block aus reinem Ethylenoxid und optional als EO-Mischblock vorliegt, wobei der Gesamtgehalt an Ethylenoxid 5 bis 30 Gew.-% beträgt, mit einem Gehalt an primären Hydroxylgruppen von ≥ 50 mol-%,

A4 mindestens ein Polyetherpolyol mit einer Funktionalität von ≥ 2,0 bis ≤ 2,2, mit einer OH-Zahl gemäß DIN 53240 von ≥ 10 bis ≤ 40 mg KOH/g wobei das Ethylenoxid als terminaler Block aus reinem Ethylenoxid und optional als EO-Mischblock vorliegt, wobei der Gesamtgehalt an Ethylenoxid 5 bis 30 Gew.-% beträgt, mit einem Gehalt an primären Hydroxylgruppen von ≥ 50 mol-%,

A5 Wasser und/oder physikalisches Treibmittel,

A6 Verbindungen, enthaltend Polyetherpolyole mit einer OH-Zahl gemäß DIN 53420 von 250 bis 550 mg KOH/g.

A7 Hilfs- und Zusatzstoffe wie

a) Katalysatoren,
b) oberflächenaktive Zusatzstoffe,
c) Additive

mit Komponente B enthaltend Di- und/oder Polyisocyanate bei einem Isocyanat-Index von 70 bis 120.

2. Verfahren gemäß Anspruch 1, wobei die Komponenten gemäß den folgenden Anteilen umgesetzt werden, und wobei die Summe der Gewichtsteile von A1, A2, A3 und A4 100 ergibt: A1: von 25 bis 45 Gew.-Teile; A2: von 23 bis 40 Gew.-Teile; A3: von 20 bis 35 Gew.-Teile; A4: bis 10 Gew.-Teile; A5: 0,5 bis 25 Gew.-Teile (bezogen auf die Summe der Gew.-Teile der Komponenten A1, A2, A3 und A4); A6: von 0,1 bis 10,0 Gew.-Teile (bezogen auf die Summe der Gew.-Teile der Komponenten A1, A2, A3 und A4); A7: 0,05 bis 10,0 Gew.-Teile (bezogen auf die Summe der Gew.-Teile der Komponenten A1, A2, A3 und A4).

3. Verfahren gemäß Anspruch 1, wobei die Komponenten gemäß den folgenden Anteilen umgesetzt werden, und wobei die Summe der Gewichtsteile von A1, A2, A3 und A4 100 ergibt: A1: von 28 bis 40 Gew.-Teile; A2: von 25 bis 38 Gew.-Teile; A3: von 23 bis 33 Gew.-Teile; A4: bis 8 Gew.-Teile; A5: 0,8 bis 15 Gew.-Teile (bezogen auf die Summe der Gew.-Teile der Komponenten A1, A2, A3 und A4); A6: von 0,2 bis 9,0 Gew.-Teile (bezogen auf die Summe der Gew.-Teile der Komponenten A1, A2, A3 und A4); A7: 0,1 bis 7,5 Gew.-Teile (bezogen auf die Summe der Gew.-Teile der Komponenten A1, A2, A3 und A4).

4. Verfahren gemäß Anspruch 1 bis 3, wobei die Polyolkomponente A

A1 mindestens ein Polyetherpolyol mit einer Funktionalität von 2 bis 4, mit einer OH-Zahl gemäß DIN 53240 von ≥ 25 bis ≤ 50 mg KOH/g, wobei das Ethylenoxid als EO-Mischblock und terminalem Block aus reinem Ethylenoxid vorliegt, wobei der Gesamtgehalt an Ethylenoxid ≥ 60 Gew.-% beträgt, mit einem Gehalt an primären Hydroxylgruppen von ≥ 60 mol-%,

A2 mindestens ein Polyetherpolyol mit einer Funktionalität von 2 bis 4, mit einer OH-Zahl gemäß DIN 53240 von ≥ 190 bis ≤ 300 mg KOH/g, wobei das Ethylenoxid als EO-Mischblock vorliegt, wobei der Gesamtgehalt an Ethylenoxid 0 bis 5 Gew.-% beträgt,

A3 mindestens ein Polyetherpolyol mit einer Funktionalität von 2 bis 4, mit einer OH-Zahl gemäß DIN 53240 von ≥ 20 bis ≤ 35 mg KOH/g wobei das Ethylenoxid als terminaler Block aus reinem Ethylenoxid und optional als EO-Mischblock vorliegt, wobei der Gesamtgehalt an Ethylenoxid 10 bis 25 Gew.-% beträgt, mit einem Gehalt an primären Hydroxylgruppen von ≥ 60 mol-%,

A4 mindestens ein Polyetherpolyol mit einer Funktionalität von $\geq 2,0$ bis $\leq 2,2$, mit einer OH-Zahl gemäß DIN 53240 von $\geq 15$ bis $\leq 35$ mg KOH/g wobei das Ethylenoxid als terminaler Block aus reinem Ethylenoxid und optional als EO-Mischblock vorliegt, wobei der Gesamtgehalt an Ethylenoxid 10 bis 25 Gew.-% beträgt, mit einem Gehalt an primären Hydroxylgruppen von $\geq 60$ mol-%,

A5 Wasser und/oder physikalisches Treibmittel,

A6 Verbindungen, enthaltend Polyetherpolyole mit einer OH-Zahl gemäß DIN 53420 von 300 bis 500 mg KOH/g.

A7 Hilfs- und Zusatzstoffe wie

    a) Katalysatoren,
    b) oberflächenaktive Zusatzstoffe,
    c) Additive

enthält.

5. Verfahren gemäß Anspruch 1 bis 4, wobei Komponente B mindestens eine Verbindung ausgewählt aus der Gruppe bestehend aus 2,4- und/oder 2,6-Toluylendiisocyanat, 4,4'-, 2,4'-, 2,2'-Diphenylmethandiisocyanat, oligomeres Diphenylmethandiisocyanat und Polyphenylpolymethylenpolyisocyanat ("Mehrkern-MDI") eingesetzt wird.

6. Verfahren gemäß Anspruch 1 bis 5, wobei Komponente B ein Gemisch aus 4,4'-, 2,4'-, 2,2'-Diphenylmethandiisocyanat, oligomeres Diphenylmethandiisocyanat und/oder Polyphenylpolymethylenpolyisocyanat ("Mehrkern-MDI") umfasst.

7. Verfahren gemäß Anspruch 1 bis 6, wobei Komponente B einen NCO-Gehalt von 20 bis 45 Gew.-% aufweist.

8. Verfahren gemäß Anspruch 1 bis 7, wobei Komponente B einen NCO-Gehalt von 30,5 bis 34 Gew.-% aufweist.

9. Verfahren gemäß Anspruch 1 bis 8, wobei die Herstellung des viskoelastischen Polyurethan-Schaumstoffs bei einem Isocyanat-Index von 80 - 100 erfolgt.

10. Viskoelastische Polyurethan-Schaumstoffe erhältlich durch das Verfahren gemäß Anspruch 1 bis 9.

11. Viskoelastische Polyurethan-Schaumstoffe gemäß Anspruch 10, wobei diese viskoelastischen Polyurethan-Schaumstoffe eine Zugfestigkeit von $\geq 95$ kPa nach DIN EN ISO 1798 aufweisen.

12. Viskoelastische Polyurethan-Schaumstoffe gemäß Anspruch 10 oder 11 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

13. Polyolzusammensetzung enthaltend

A1 mindestens ein Polyetherpolyol mit einer Funktionalität von 2 bis 6, mit einer OH-Zahl gemäß DIN 53240 von $\geq 20$ bis $\leq 80$ mg KOH/g, wobei das Ethylenoxid als EO-Mischblock und terminalen Block aus reinem Ethylenoxid vorliegt, wobei der Gesamtgehalt an Ethylenoxid $\geq 50$ Gew.-%, beträgt, mit einem Gehalt an primären Hydroxylgruppen von $\geq 50$ mol-%,

A2 mindestens ein Polyetherpolyol mit einer Funktionalität von 2 bis 6, mit einer OH-Zahl gemäß DIN 53240 von $\geq 180$ bis $\leq 320$ mg KOH/g, wobei das Ethylenoxid als EO-Mischblock vorliegt, wobei der Gesamtgehalt an Ethylenoxid 0 bis10 Gew.-% beträgt,

A3 mindestens ein Polyetherpolyol mit einer Funktionalität von 2 bis 6, mit einer OH-Zahl gemäß DIN 53240 von $\geq 15$ bis $\leq 40$ mg KOH/g, wobei das Ethylenoxid als terminaler Block aus reinem Ethylenoxid und optional als EO-Mischblock vorliegt, wobei der Gesamtgehalt an Ethylenoxid 5 bis 30 Gew.-% beträgt, mit einem Gehalt an primären Hydroxylgruppen von $\geq 50$ mol-%,

A4 mindestens ein Polyetherpolyol mit einer Funktionalität von $\geq 2,0$ bis $\leq 2,2$ mit einer OH-Zahl gemäß DIN 53240 von $\geq 10$ bis $\leq 40$ mg KOH/g, wobei das Ethylenoxid als terminaler Block aus reinem Ethylenoxid und optional als EO-Mischblock vorliegt, wobei der Gesamtgehalt an Ethylenoxid 5 bis 30 Gew.-% beträgt, mit einem Gehalt an primären Hydroxylgruppen von $\geq 50$ mol-%.

14. Polyolzusammensetzung gemäß Anspruch 13, wobei die Polyetherpolyole A1 bis A4 in folgenden Mengen enthalten sind: A1: von 25 bis 45 Gew.-Teile; A2: von 23 bis 40 Gew.-Teile; A3: von 20 bis 35 Gew.-Teile; A4: bis 10 Gew.-Teile und wobei die Summe der Gewichtsteile von A1, A2, A3 und A4 100 ergibt.

**Claims**

1. Process for producing viscoelastic polyurethane foam obtainable by reaction of a polyol component A comprising

   A1 at least one polyether polyol having a functionality of 2 to 6, having an OH number according to DIN 53240 of ≥ 20 to ≤ 80 mg KOH/g, wherein the ethylene oxide is present as an EO mixed block and a terminal block of pure ethylene oxide, wherein the total content of ethylene oxide is ≥ 50 wt%, with a content of primary hydroxyl groups of ≥ 50 mol%,
   A2 at least one polyether polyol having a functionality of 2 to 6, having an OH number according to DIN 53240 of ≥ 180 to ≤ 320 mg KOH/g, wherein the ethylene oxide is present as an EO mixed block, wherein the total content of ethylene oxide is 0 to 10 wt%,
   A3 at least one polyether polyol having a functionality of 2 to 6, having an OH number according to DIN 53240 of ≥ 15 to ≤ 40 mg KOH/g, wherein the ethylene oxide is present as a terminal block of pure ethylene oxide and optionally as an EO mixed block, wherein the total content of ethylene oxide is 5 to 30 wt%, with a content of primary hydroxyl groups of ≥ 50 mol%,
   A4 at least one polyether polyol having a functionality of ≥ 2.0 to ≤ 2.2, having an OH number according to DIN 53240 of ≥ 10 to ≤ 40 mg KOH/g, wherein the ethylene oxide is present as a terminal block of pure ethylene oxide and optionally as an EO mixed block, wherein the total content of ethylene oxide is 5 to 30 wt%, with a content of primary hydroxyl groups of ≥ 50 mol%,
   A5 water and/or physical blowing agent,
   A6 compounds comprising polyether polyols having an OH number according to DIN 53420 of 250 to 550 mg KOH/g.
   A7 auxiliary and added substances such as

      a) catalysts,
      b) surface-active added substances,
      c) additives

   with component B comprising di- and/or polyisocyanates at an isocyanate index of 70 to 120.

2. Process according to Claim 1, wherein the components are reacted according to the following proportions and wherein the weight fractions of A1, A2, A3 and A4 sum to 100: A1: from 25 to 45 parts by wt; A2: from 23 to 40 parts by wt, A3: from 20 to 35 parts by wt, A4: from 0 to 10 parts by wt, A5: 0.5 to 25 parts by wt (based on the sum of the parts by wt of components A1, A2, A3 and A4), A6: from 0.1 to 10.0 parts by wt (based on the sum of the parts by wt of components A1, A2, A3 and A4), A7: 0.05 to 10.0 parts by wt (based on the sum of the parts by wt of components A1, A2, A3 and A4).

3. Process according to Claim 1, wherein the components are reacted according to the following proportions and wherein the weight fractions of A1, A2, A3 and A4 sum to 100: A1: from 28 to 40 parts by wt; A2: from 25 to 38 parts by wt, A3: from 23 to 33 parts by wt, A4: from 0 to 8 parts by wt, A5: 0.8 to 15 parts by wt (based on the sum of the parts by wt of components A1, A2, A3 and A4), A6: from 0.2 to 9.0 parts by wt (based on the sum of the parts by wt of components A1, A2, A3 and A4), A7: 0.1 to 7.5 parts by wt (based on the sum of the parts by wt of components A1, A2, A3 and A4).

4. Process according to any of Claims 1 to 3, wherein the polyol component A comprises

   A1 at least one polyether polyol having a functionality of 2 to 4, having an OH number according to DIN 53240 of ≥ 25 to ≤ 50 mg KOH/g, wherein the ethylene oxide is present as an EO mixed block and a terminal block of pure ethylene oxide, wherein the total content of ethylene oxide is ≥ 60 wt%, with a content of primary hydroxyl groups of ≥ 60 mol%,
   A2 at least one polyether polyol having a functionality of 2 to 4, having an OH number according to DIN 53240 of ≥ 190 to ≤ 300 mg KOH/g, wherein the ethylene oxide is present as an EO mixed block, wherein the total content of ethylene oxide is 0 to 5 wt%,
   A3 at least one polyether polyol having a functionality of 2 to 4, having an OH number according to DIN 53240 of ≥ 20 to ≤ 35 mg KOH/g, wherein the ethylene oxide is present as a terminal block of pure ethylene oxide and optionally as an EO mixed block, wherein the total content of ethylene oxide is 10 to 25 wt%, with a content of primary hydroxyl groups of $\geq$ 60 mol%,

A4 at least one polyether polyol having a functionality of $\geq$ 2.0 to $\leq$ 2.2, having an OH number according to DIN 53240 of $\geq$ 15 to $\leq$ 35 mg KOH/g, wherein the ethylene oxide is present as a terminal block of pure ethylene oxide and optionally as an EO mixed block, wherein the total content of ethylene oxide is 10 to 25 wt%, with a content of primary hydroxyl groups of $\geq$ 60 mol%,

A5 water and/or physical blowing agent,

A6 compounds comprising polyether polyols having an OH number according to DIN 53420 of 300 to 500 mg KOH/g.

A7 auxiliary and added substances such as

    a) catalysts,
    b) surface-active added substances,
    c) additives.

5. Process according to any of Claims 1 to 4, wherein at least one compound selected from the group consisting of 2,4- and/or 2,6-tolylene diisocyanate, 4,4'-, 2,4'-, 2,2'-diphenylmethane diisocyanate, oligomeric diphenylmethane diisocyanate and polyphenylpolymethylene polyisocyanate ("polynuclear MDI") is employed as component B.

6. Process according to any of Claims 1 to 5, wherein component B comprises a mixture of 4,4'-, 2,4'-, 2,2'-diphenylmethane diisocyanate, oligomeric diphenylmethane diisocyanate and/or polyphenyl polymethylene polyisocyanate ("polycyclic MDI").

7. Process according to any of Claims 1 to 6, wherein component B has an NCO content of 20 to 45 wt%.

8. Process according to any of Claims 1 to 7, wherein component B has an NCO content of 30.5 to 34 wt%.

9. Process according to any of Claims 1 to 8, wherein production of the viscoelastic polyurethane foam is effected at an isocyanate index of 80 - 100.

10. Viscoelastic polyurethane foam obtainable by the process according to any of Claims 1 to 9.

11. Viscoelastic polyurethane foam according to Claim 10, wherein this viscoelastic polyurethane foam has a tensile strength of $\geq$ 95 kPa according to DIN EN ISO 1798.

12. Viscoelastic polyurethane foam according to Claim 10 or 11 for producing furniture cushioning, textile inserts, mattresses, automotive seats, headrests, armrests, sponges, foam sheetings for use in automotive parts such as headliners, door trims, seat covers and component elements for example.

13. Polyol composition comprising

A1 at least one polyether polyol having a functionality of 2 to 6, having an OH number according to DIN 53240 of $\geq$ 20 to $\leq$ 80 mg KOH/g, wherein the ethylene oxide is present as an EO mixed block and a terminal block of pure ethylene oxide, wherein the total content of ethylene oxide is $\geq$ 50 wt%, with a content of primary hydroxyl groups of $\geq$ 50 mol%,

A2 at least one polyether polyol having a functionality of 2 to 6, having an OH number according to DIN 53240 of $\geq$ 180 to $\leq$ 320 mg KOH/g, wherein the ethylene oxide is present as an EO mixed block, wherein the total content of ethylene oxide is 0 to 10 wt%,

A3 at least one polyether polyol having a functionality of 2 to 6, having an OH number according to DIN 53240 of $\geq$ 15 to $\leq$ 40 mg KOH/g, wherein the ethylene oxide is present as a terminal block of pure ethylene oxide and optionally as an EO mixed block, wherein the total content of ethylene oxide is 5 to 30 wt%, with a content of primary hydroxyl groups of $\geq$ 50 mol%,

A4 at least one polyether polyol having a functionality of $\geq$ 2.0 to $\leq$ 2.2, having an OH number according to DIN 53240 of $\geq$ 10 to $\leq$ 40 mg KOH/g, wherein the ethylene oxide is present as a terminal block of pure ethylene oxide and optionally as an EO mixed block, wherein the total content of ethylene oxide is 5 to 30 wt%, with a content of primary hydroxyl groups of $\geq$ 50 mol%.

14. Polyol composition according to Claim 13, wherein the polyether polyols A1 to A4 are present in the following amounts: A1: from 25 to 45 parts by wt; A2: from 23 to 40 parts by wt, A3: from 20 to 35 parts by wt, A4: from 0 to 10 parts by wt and wherein the weight fractions of A1, A2, A3 and A4 sum to 100.

**Revendications**

1. Procédé pour la préparation de mousse de polyuréthane viscoélastique pouvant être obtenue par transformation d'un composant de type polyol A contenant

   A1 au moins un polyétherpolyol doté d'une fonctionnalité de 2 à 6, doté d'un indice d'OH selon la norme DIN 53240 de $\geq$ 20 à $\leq$ 80 mg de KOH/g, l'oxyde d'éthylène étant présent en tant que bloc mixte d'EO et bloc terminal d'oxyde d'éthylène pur, la teneur totale en oxyde d'éthylène étant $\geq$ 50 % en poids, avec une teneur en groupes hydroxyle primaire de $\geq$ 50 % en moles,
   A2 au moins un polyétherpolyol doté d'une fonctionnalité de 2 à 6, doté d'un indice d'OH selon la norme DIN 53240 de $\geq$ 180 à $\leq$ 320 mg de KOH/g, l'oxyde d'éthylène étant présent en tant que bloc mixte d'EO, la teneur totale en oxyde d'éthylène étant de 0 à 10 % en poids,
   A3 au moins un polyétherpolyol doté d'une fonctionnalité de 2 à 6, doté d'un indice d'OH selon la norme DIN 53240 de $\geq$ 15 à $\leq$ 40 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 5 à 30 % en poids, avec une teneur en groupes hydroxyle primaire de $\geq$ 50 % en moles,
   A4 au moins un polyétherpolyol doté d'une fonctionnalité de $\geq$ 2,0 à $\leq$ 2,2, doté d'un indice d'OH selon la norme DIN 53240 de $\geq$ 10 à $\leq$ 40 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 5 à 30 % en poids, avec une teneur en groupes hydroxyle primaire de $\geq$ 50 % en moles,
   A5 de l'eau et/ou un agent gonflant physique,
   A6 des composés, contenant des polyétherpolyols dotés d'un indice d'OH selon la norme DIN 53240 de 250 à 550 mg de KOH/g,
   A7 des auxiliaires et adjuvants comme

       a) des catalyseurs,
       b) des adjuvants actifs en surface,
       c) des additifs

   avec un composant B contenant des diisocyanates et/ou des polyisocyanates
   à un indice d'isocyanate de 70 à 120.

2. Procédé selon la revendication 1, les composants étant transformés selon les proportions suivantes, et la somme des parties en poids de A1, A2, A3 et A4 donnant 100 : A1 : de 25 à 45 parties en poids ; A2 : de 23 à 40 parties en poids ; A3 : 20 à 35 parties en poids ; A4 : jusqu'à 10 parties en poids ; A5 : 0,5 à 25 parties en poids (par rapport à la somme des parties en poids des composants A1, A2, A3 et A4) ; A6 : de 0,1 à 10,0 parties en poids (par rapport à la somme des parties en poids des composants A1, A2, A3 et A4) ; A7 : 0,05 à 10,0 parties en poids (par rapport à la somme des parties en poids des composants A1, A2, A3 et A4).

3. Procédé selon la revendication 1, les composants étant transformés selon les proportions suivantes, et la somme des parties en poids de A1, A2, A3 et A4 donnant 100 : A1 : de 28 à 40 parties en poids ; A2 : de 25 à 38 parties en poids ; A3 : 23 à 33 parties en poids ; A4 : jusqu'à 8 parties en poids ; A5 : 0,8 à 15 parties en poids (par rapport à la somme des parties en poids des composants A1, A2, A3 et A4) ; A6 : de 0,2 à 9,0 parties en poids (par rapport à la somme des parties en poids des composants A1, A2, A3 et A4) ; A7 : 0,1 à 7,5 parties en poids (par rapport à la somme des parties en poids des composants A1, A2, A3 et A4).

4. Procédé selon les revendications 1 à 3, le composant de type polyol A contenant

   A1 au moins un polyétherpolyol doté d'une fonctionnalité de 2 à 4, doté d'un indice d'OH selon la norme DIN 53240 de $\geq$ 25 à $\leq$ 50 mg de KOH/g, l'oxyde d'éthylène étant présent en tant que bloc mixte d'EO et bloc terminal d'oxyde d'éthylène pur, la teneur totale en oxyde d'éthylène étant $\geq$ 60 % en poids, avec une teneur en groupes hydroxyle primaire de $\geq$ 60 % en moles,
   A2 au moins un polyétherpolyol doté d'une fonctionnalité de 2 à 4, doté d'un indice d'OH selon la norme DIN 53240 de $\geq$ 190 à $\leq$ 300 mg de KOH/g, l'oxyde d'éthylène étant présent en tant que bloc mixte d'EO, la teneur totale en oxyde d'éthylène étant de 0 à 5 % en poids,

A3 au moins un polyétherpolyol doté d'une fonctionnalité de 2 à 4, doté d'un indice d'OH selon la norme DIN 53240 de ≥ 20 à ≤ 35 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 10 à 25 % en poids, avec une teneur en groupes hydroxyle primaire de ≥ 60 % en moles,

A4 au moins un polyétherpolyol doté d'une fonctionnalité de ≥ 2,0 à ≤ 2,2, doté d'un indice d'OH selon la norme DIN 53240 de ≥ 15 à ≤ 35 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 10 à 25 % en poids, avec une teneur en groupes hydroxyle primaire de ≥ 60 % en moles,

A5 de l'eau et/ou un agent gonflant physique,

A6 des composés, contenant des polyétherpolyols dotés d'un indice d'OH selon la norme DIN 53240 de 300 à 500 mg de KOH/g,

A7 des auxiliaires et adjuvants comme

a) des catalyseurs,
b) des adjuvants actifs en surface,
c) des additifs.

5. Procédé selon les revendications 1 à 4, au moins un composé choisi dans le groupe constitué par le 2,4-diisocyanate de toluylène et/ou le 2,6-diisocyanate de toluylène, le 4,4'-diisocyanate de diphénylméthane, le 2,4'-diisocyanate de diphénylméthane, le 2,2'-diisocyanate de diphénylméthane, du diisocyanate de diphénylméthane oligomérique et du polyisocyanate de polyphénylpolyméthylène (« MDI à plusieurs noyaux ») étant utilisé comme composant B.

6. Procédé selon les revendications 1 à 5, le composant B comprenant un mélange de 4,4'-diisocyanate de diphénylméthane, de 2,4'-diisocyanate de diphénylméthane, de 2,2'-diisocyanate de diphénylméthane, de diisocyanate de diphénylméthane oligomérique et/ou de polyisocyanate de polyphénylpolyméthylène (« MDI à plusieurs noyaux »).

7. Procédé selon les revendications 1 à 6, le composant B présentant une teneur en NCO de 20 à 45 % en poids.

8. Procédé selon les revendications 1 à 7, le composant B présentant une teneur en NCO de 30,5 à 34 % en poids.

9. Procédé selon les revendications 1 à 8, la préparation de la mousse de polyuréthane viscoélastique étant réalisée à un indice d'isocyanate de 80 à 100.

10. Mousses de polyuréthane viscoélastiques pouvant être obtenues par le procédé selon les revendications 1 à 9.

11. Mousses de polyuréthane viscoélastiques selon la revendication 10, ces mousses de polyuréthane viscoélastiques présentant une résistance à la traction de ≥ 95 kPa selon la norme DIN EN ISO 1798.

12. Mousses de polyuréthane viscoélastiques selon la revendication 10 ou 11 pour la préparation de rembourrage de meubles, d'inserts textiles, de matelas, de sièges d'automobile, d'appui-têtes, d'accoudoirs, d'éponges, de feuilles de mousse pour une utilisation dans des pièces d'automobile comme par exemple des garnitures de plafond, des habillages de portes latérales, des housses de sièges et des composants.

13. Composition de polyol contenant

A1 au moins un polyétherpolyol doté d'une fonctionnalité de 2 à 6, doté d'un indice d'OH selon la norme DIN 53240 de ≥ 20 à ≤ 80 mg de KOH/g, l'oxyde d'éthylène étant présent en tant que bloc mixte d'EO et bloc terminal d'oxyde d'éthylène pur, la teneur totale en oxyde d'éthylène étant ≥ 50 % en poids, avec une teneur en groupes hydroxyle primaire de ≥ 50 % en moles,

A2 au moins un polyétherpolyol doté d'une fonctionnalité de 2 à 6, doté d'un indice d'OH selon la norme DIN 53240 de ≥ 180 à ≤ 320 mg de KOH/g, l'oxyde d'éthylène étant présent en tant que bloc mixte d'EO, la teneur totale en oxyde d'éthylène étant de 0 à 10 % en poids,

A3 au moins un polyétherpolyol doté d'une fonctionnalité de 2 à 6, doté d'un indice d'OH selon la norme DIN 53240 de ≥ 15 à ≤ 40 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 5 à 30 % en poids, avec une teneur en groupes hydroxyle primaire de ≥ 50 % en moles,

A4 au moins un polyétherpolyol doté d'une fonctionnalité de ≥ 2,0 à ≤ 2,2, doté d'un indice d'OH selon la norme

DIN 53240 de $\geq$ 10 à $\leq$ 40 mg de KOH/g, l'oxyde d'éthylène étant présent en tant que bloc terminal d'oxyde d'éthylène pur et éventuellement en tant que bloc mixte d'EO, la teneur totale en oxyde d'éthylène étant de 5 à 30 % en poids, avec une teneur en groupes hydroxyle primaire de $\geq$ 50 % en moles.

14. Composition de polyol selon la revendication 13, les polyétherpolyols A1 à A4 étant contenus en les quantités suivantes : A1 : de 25 à 45 parties en poids ; A2 : de 23 à 40 parties en poids ; A3 : de 20 à 35 parties en poids ; A4 : jusqu'à 10 parties en poids et la somme des parties en poids de A1, A2, A3 et A4 donnant 100.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0132736 A
- EP 2225304 A
- WO 2013045336 A
- EP 0000389 A
- EP 0176013 A
- EP 0007502 A
- EP 355000 A